# EUROPEAN PATENT APPLICATION

(11) **EP 1 458 131 A1**
(43) Date of publication of application: **15.09.2004**
(21) Application number: 03251447.3
(22) Date of filing: 11.03.2003
(51) Int. Cl.: H04L 12/14, G06F 17/60, G06F 17/30

(54) **Delivery after charging confirmation of chargeable contents cached in proxy server**

(71) Applicant: HITACHI EUROPE LIMITED, Maidenhead, Berkshire, SL6 8YA (GB)
(72) Inventor: Suzuki, Toshiaki, Cambridge CB1 8YU (GB); Kitahara, Chiho, Cambridge CB4 1JN (GB)
(74) Representative: Read, Matthew Charles

(57) **Abstract**

A system for providing content to a user, comprising a plurality of user terminals 10,20, at least one proxy server 30, an accounting server 40 and at least one content server, wherein said accounting server 40 is operable to produce accounting data corresponding to the charge made to the user for receiving cached pay-per-view content, characterised in that said proxy server 30 is operable to confirm that charging for cached pay-per-view content has occurred prior to or after supplying said cached pay-per-view content to one of the user terminals 10,20 of the user that requested the content.

## Description

### Field of Invention

This invention relates to a caching procedure for chargeable content, for example pay-per-view content, and a system for content transmission in storage embedded networks and programmable networks.

### Background

In a best-effort network such as the Internet, content transmission between a sender and a receiver is not guaranteed. Even if all data is transmitted from the sender to the receiver, there may sometimes be a long time delay or large jitter due to network congestion. Caching is a well-known technology capable of solving these problems. Rather than content being transmitted directly from a content server to a receiver, a cache server located at the edge of a network, caches content that is transmitted from the content server to the end user. When the cache server receives a request to send content that it has cached, it sends the requested content directly to the end user on behalf of the content server. Therefore the cache server can rapidly provide the content that is requested by the end user, even if there is network congestion between the cache server and content server.

Another well-known technology for improving data transmission in networks is a content delivery network (CDN). In one example of a CDN, when a server receives a request from an end user to send content, a request is sent to the cache server which is located closest to the end user to send the content on behalf of the content server. This significantly reduces network congestion by simplifying the path between the sender and the end user. Further information is available at the following websites: http://www.akamai.com/; http://www.infolibria.com/.

A charging mechanism for providing pay-per-view content is disclosed in JP 2002 - 199365A. In this document, an explanation is provided of how charging for pay-per-view content in the context of cached networks can be achieved. According to the document, when a cache server provides cached pay-per-view content, it also sends an identifier of the content and an identifier of the end user to the content server for accounting. The content server then executes accounting based on that information. However, one problem with this system is that the cache server sends cached pay content to the end user without confirmation that charging has been finalised. Therefore, even if the charging is not executed correctly, the cache server will still provide the cached pay-per-view content to the end user.

According to the "Hypertext Transfer Protocol HTTP/1.1" specification as described in the RFC (Requests for Comments)-2616 from the IETF (Internet Engineering Task Force), caching of content is only allowable if there is specific permission. For example, an identifier defining whether content is cacheable or not is described. However, the document goes no further towards detailing how to cache the pay-per-view content and how to charge for this. Due to these omissions, and the problems described above, pay-per-view content is usually specified as being non-cacheable.

### Summary of the Invention

The invention provides a mechanism for sending cached pay-per-view content to a user with a system for confirming that charging the user has been completed. In addition, the invention provides an integrated system for caching, providing, and charging for pay-per-view content.

In accordance with the invention from a first aspect there is provided a proxy server for providing chargeable content to a plurality of user terminals comprising input means for receiving data from said plurality of user terminals including requests for chargeable content, output means for sending data to an accounting server, input means for receiving chargeable content from at least one content server, caching means for caching chargeable content, terminal output means for providing data to said plurality of user terminals, including said requested chargeable content, and wherein, when cached chargeable content is requested from one of the user terminals, said proxy server is operable to confirm that charging for said cached pay-per-view content has occurred.

The proxy server according to one embodiment of the invention may be organised such that said caching means is operable to cache said chargeable content only if permission for said caching has been provided. The proxy server may include storage means operable to temporarily store data relating to a request for content from the user terminals. The input means for receiving data from said plurality of user terminals may be configured to receive accounting information, and the proxy server may further comprise means for storing and executing an accounting program for determining accounting data corresponding to the charge made to a user for viewing said pay-per-view content.

In accordance with the invention from a second aspect there is provided a system for providing content to a user, comprising the proxy server as described above, connected to said accounting server, said content server and to said user terminals. The proxy server may be operable to confirm that charging for cached chargeable content has occurred prior to supplying it to one of the user terminals which may be achieved by the proxy server requesting confirmation from said accounting server at least once. The proxy server may be further operable to inform said accounting server that said chargeable cached content has been transmitted to said user terminal.

The proxy server may also be operable to confirm that charging for cached pay-per-view content has occurred by running an accounting program locally thereon to produce accounting data corresponding to the charge made to the user for receiving said chargeable cached content and sending the accounting data to the accounting server. The accounting server may request said accounting data from said proxy server at least once.

In accordance with the invention from a third aspect there is provided an accounting server for charging a user for chargeable content received by said user comprising input means for receiving data from at least one proxy server, output means for providing data to said proxy server and a content server, data classifying means, data analysing and processing means, accounting means, and wherein said accounting server is operable to provide confirmation to said proxy server that charging for said pay-per-view content has occurred, or said accounting server is operable to provide an accounting program for producing accounting data corresponding to the charge made to the user for receiving pay-per-view content to said proxy server.

According to the present invention, there is also provided an associated method of providing content to a user.

### Brief Description of the Drawings

In order that the invention may be more fully understood, embodiments thereof will now be described by way of example with reference to the accompanying drawings wherein:
Figure 1 is a block diagram of a first embodiment of a system for pay-per-view content transmission in accordance with the invention;
Figure 2 shows the sequence of operations for caching the pay-per-view content and sending it to the end user in accordance with the first embodiment;
Figure 3 shows the data structures that are used for caching the pay-per-view content in accordance with the first embodiment;
Figure 4 shows the data structures that are used for sending the cached content in accordance with the first embodiment;
Figure 5 shows the content of the cache database 36;
Figure 6 shows the sequence of operations for caching the pay-per-view content and sending it to the end user in accordance with the second embodiment;
Figure 7 shows the data structures that are used in the second embodiment;
Figure 8 is a block diagram of a third embodiment of a system for pay-per-view content transmission in accordance with the invention;
Figure 9 shows the sequence of operations for caching the pay-per-view content, executing an account program, and sending the content to the end user in accordance with the third embodiment;
Figure 10 shows the data structures that are used in the third embodiment;
Figure 11 shows the sequence of operations for caching the pay-per-view content, executing an account program, collecting account data, and sending the content to the end user in accordance with the fourth embodiment;
Figure 12 shows the data structures that are used in the fourth embodiment;
Figure 13 shows an example of a pay-per-view content transmission system.

### Detailed Description

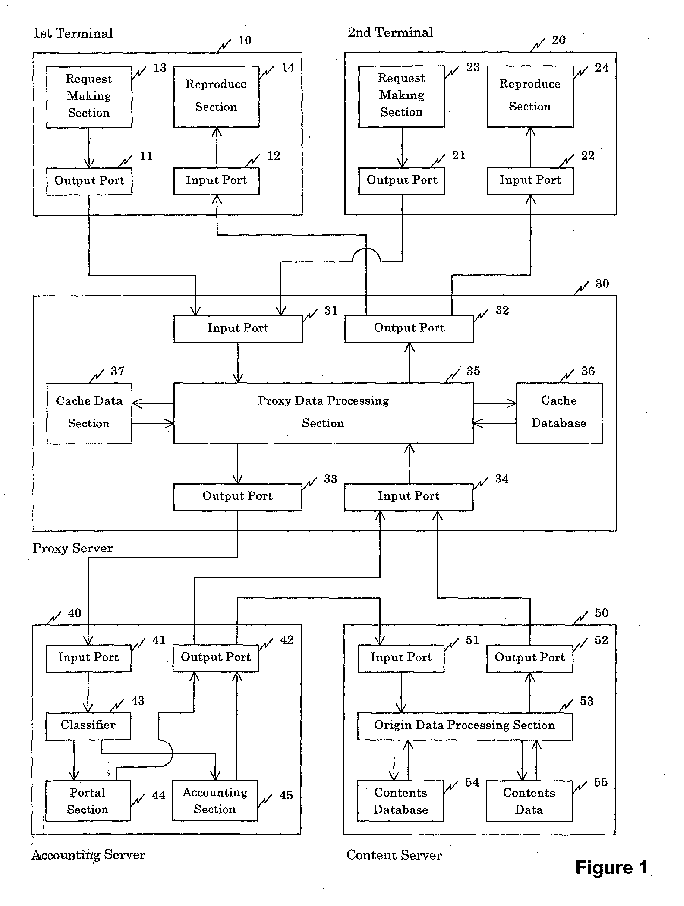

An example of a system for pay-per-view content caching and transmission is depicted in Figure 1. This comprises a terminal 10, a terminal 20, a proxy server 30, an accounting server 40 and a content server 50. As shown in Figure 1, the terminal 10 and the terminal 20 are connected to the proxy server 30 by a network, for example an IP (Internet Protocol) network. Additionally, the accounting server 40 and the content server 50 are connected to the proxy server 30 by an IP network. The accounting server 40 and the content server 50 are also interconnected. The accounting server may be owned by a credit company or a third party that is delegated accounting and/or billing tasks from other providers.

The user terminal 10 includes an output port 11, an input port 12, a request making section 13 and a reproduce section 14. The user terminal 20 similarly includes an output port 21, an input port 22, a request making section 23 and a reproduce section 24. The proxy server includes an input port 31, an output port 32, an output port 33, an input port 34, a proxy data processing section 35, a cache database 36 and cache data section 37. The accounting server includes an input port 41, an output port 42, a classifier 43, a portal section 44 and an accounting section 45. The content server includes an input port 51, an output port 52, an origin data processing section 53, a content database 54 and content data 55.

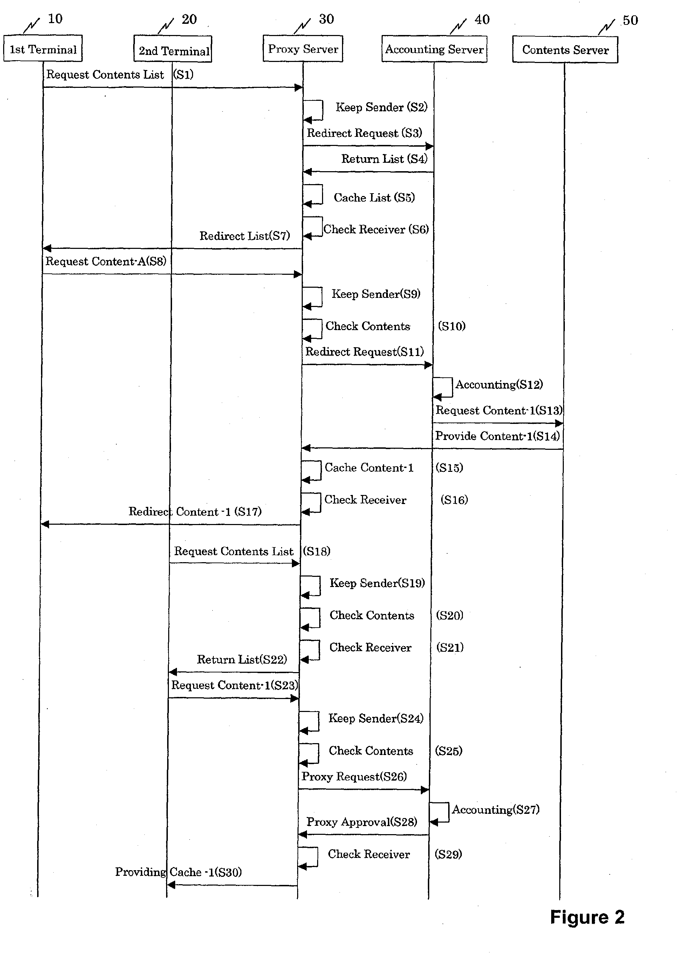

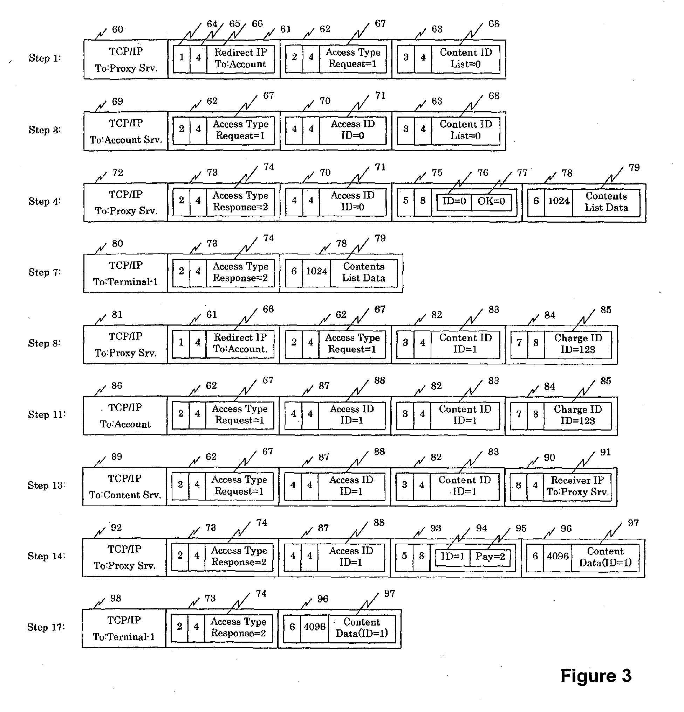

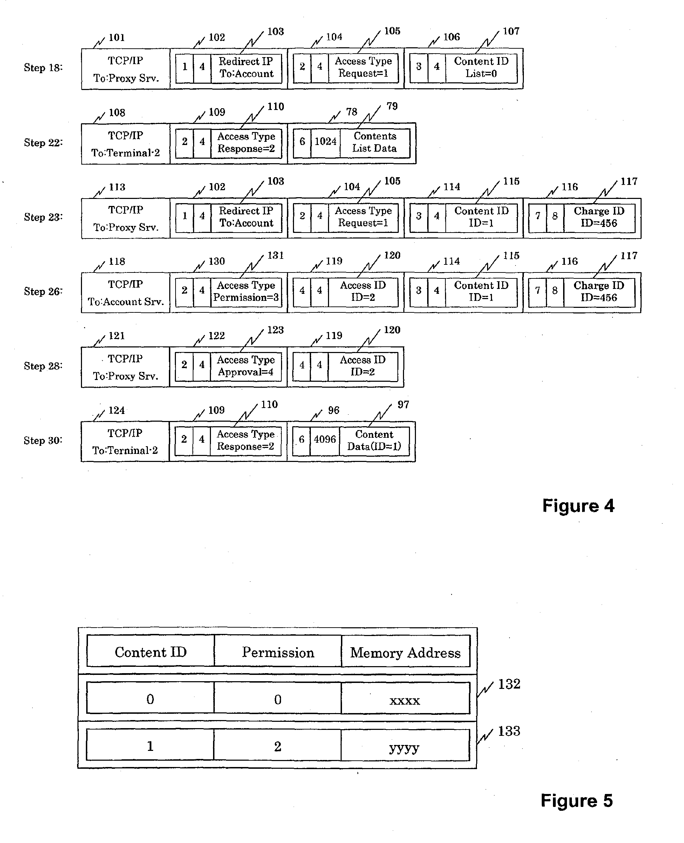

Figure 2 shows the operational sequences of the system of Figure 1. Figures 3 and 4 show the data structures of data sent between the apparatuses shown in Figure 1. More specifically, Figure 3 shows the data structures of the data used in the operational steps S1, S3, S4, S7, S8, S11, S13, S14 and S17 of Figure 2. Figure 4 shows the data structures of the data used in the operational steps S18, S22, S23, S26, S28 and S30 of Figure 2. Figure 5 shows the content of the cache database 36. Operation of the system of Figure 1 will now be described in detail with reference to Figures 2 to 5.

Firstly, a user of the terminal 10 makes a request to receive a list of the pay-per-view content available in the content server 50, via the request making section 13. The request includes the data 60, 61, 62 and 63 as shown in Figure 3. The data 60 includes the TCP (Transmission Control Protocol) and IP (Internet Protocol) headers for requesting data transmission. In this case, the source IP address is the address of the terminal 10 and the destination IP address is the address of the proxy server 30. The data 61 includes the data 64, 65 and 66. The data 64 is a data type, number one representing a redirecting IP address. The data 65 is a data size, the number four signifying that the size of the data is 4 bytes long, and the data 66 is the real data of the data type 64, i.e. a redirecting IP address. In this example the redirecting address is that of the accounting server 40, so that the request is retransmitted to this from the proxy server 30. The data 62 includes data type two, a data size of four bytes and the data 67. Data type two is access type data, and access type one means a content request. The data 63 includes data type three, a data size of four bytes and the data 68. Data type three means a content ID (Identifier), and the content ID zero means a content list. The user of terminal 10 then sends the request to the proxy server 30 via the output port 11.

The proxy server 30 receives the request, which includes the data 60, 61, 62 and 63 from the terminal 10, via the input port 31 (Step S1). The received data 60 to 63 is transmitted to the proxy data processing section 35. The proxy data processing section 35 creates an access ID 70, which is used to identify the sender of the request, and temporarily stores the received data 60 to 63 with this access ID data 70 within its memory. The access ID 70 comprises data type four, a data size of four bytes, and access ID zero 71. The data type four signifies an access ID (Step S2). The proxy data processing section 35 checks whether or not the requested data is currently cached. In this description, transmitted data is sent using, as an example, the TCP/IP protocol. However, other types of protocol such as UDP/IP (User Datagram Protocol) may equally be used. If the requested data is not cached, the proxy data processing section 35 creates the TCP/IP data 69 from the data 61 to redirect the request to the accounting server 40, and sends the data 69, 62, 70 and 63 to the accounting server 40 via the output port 33.

The accounting server 40 receives the data 69, 62, 70 and 63 via the input port 41 (Step S3). The received data 69, 62, 70 and 63 is transmitted to the classifier 43. When the data does not include accounting information, the data is transmitted to the portal section 44. The portal section 44 analyses the received data. Since the received data includes a request for the content list (via the data 62 and 63), the portal section 44 returns the content list to the proxy server 30. To do this, the portal section 44 creates TCP/IP data 72 from the data 69. In addition, the portal section 44 creates data 73 from the data 62 using access type data two 74 to show that the data is the response. At the same time, the portal section 44 creates data 75 and 78, from the data 70 and 63. The data type of the data 75 is five, signifying that is represents permission for data caching. The size of the data 75 is eight bytes. The data 75 includes data 76 and 77. The data 76 comprises the content ID and is the same as the data 68. The data 77 comprises the actual permission data of cashing and the data zero means the content are free. The data 78 is real requested data and it includes data type six, data size(1024 bytes) and real lists data 79. The data type six signifies that the data is content data. Then the portal section 44 returns the data 72, 73, 70, 75 and 78 to the proxy server 30 via the output port 42.

The proxy server 30 receives the data 72, 73, 70, 75 and 78 from the accounting server 40 (Step S4). The received data 72,73, 70, 75 and 78 is transmitted to the proxy data processing section 35. The proxy data processing section 35 checks the received data, particularly the data 75. If the data flag 75 specifies that caching of the content list data is allowed, the proxy data processing section 35 caches the data in the cache data section 37, and stores the content ID 76 and permission data 77 with the memory address of the cached content list data in the cache database 36 (Step S5). The structure of the data stored in the cache database 36 is shown in Figure 5 as data 132. The proxy data processing section 35 checks the receiver details from the data 60 to 63 which was previously stored with access ID zero 70, and creates the TCP/IP header data 80 (Step S6). The proxy data processing section 35 then deletes the temporarily stored data before sending the data 80, 73 and 78 to user terminal 10 via the output port 32.

User terminal 10 receives the data 80, 73 and 78 via the input port 12. The received data 80, 73 and 78 is transmitted to the reproduce section 14. The reproduce section 14 reproduces the content list data 79 (Step S7). The user of the terminal 10 then selects the pay-per-view content from the reproduced content list and creates a request to see selected pay-per-view content via the request making section 13. The request is comprised of the data 81, 61, 62, 82 and 84. The TCP/IP header data 81 is created for sending the request to the proxy server 30. The usage of the data 61 and 62 has been previously explained. The data 82 comprises the ID number data 83 of the pay-per-view content that was selected by user. In this example, the number of the ID is one. The data 84 comprises the data type seven which means that the data is a user ID for accounting, and a data size of 8 bytes. In addition, it includes the accounting ID data 85 which is used for charging the user to see a pay-per-view content. Then the request making section 13 sends the request data 81, 61, 62, 82 and 84 to the proxy server 30 via the output port 11.

The proxy server receives the data 81, 61, 62, 82 and 84 via the input port 31 (Step S8). The received data is then transmitted to the proxy data processing section 35. The proxy data processing section 35 creates the access ID data 87, and temporarily stores the received data 81, 61, 62, 82 and 84 with this access ID data 87 within memory (Step S9). The proxy data processing section then checks whether or not the requested data is cached (Step S10). If the requested data is not cached, the proxy data processing section 35 creates the TCP/IP data 86 from data 61 to redirect the request to the accounting server 40, and sends the data 86, 62, 87, 82 and 84 to the accounting server 40 via the output port 33.

The accounting server 40 receives the data 86, 62, 87, 82 and 84 via the input port 41 (Step S11). The received data 86, 62, 87, 82 and 84 is transmitted to the classifier 43. Should the data include accounting information, the data is transmitted to the accounting section 45. The accounting section 45 charges a price associated with the content ID data 82 to the charge ID that is specified by data 84 (Step S12). The accounting section 45 then creates the TCP/IP header data 89 to relay details of the requested data to the content server 50. In addition, it creates the data 90 that comprises data type eight and a data size, as well as details of the receiver of the requested content data. The data type eight means that the data is the IP address data 91 of the receiver. The accounting section 45 then sends the data 89, 62, 87, 82 and 90 to the content server 50 via the output port 42.

The content server 50 receives the data 89, 62, 87, 82 and 90 from the accounting server 40 via the input port 51 (Step S13). The received data 89, 62, 87, 82 and 90 is transmitted to the origin data processing section 53. The origin data processing section 53 analyses the received data. Since the received data includes a request for the content of ID one (data 62 and 82), the origin data processing section 53 returns the requested content data to the proxy server 30. To do this, the origin data processing section 53 creates the TCP/IP data 92 from the data 90. Additionally, the origin data processing section 53 creates the data 73 from the data 62 to signal that the data is a response. The origin data processing section 53 then accesses the content database 54, and retrieves the memory address in the content data memory 55, where the requested data is stored. In this case, the origin data processing section gets the memory address of the memory where content ID one data is stored. Then the origin data processing section reads the requested data from the content data 55 and creates data 96 which includes the real content data 97. Also, it creates data 93 which includes data 94, the content ID as that of data 83, and most importantly, data 95. The value of data 95 is two which means that even if included data is pay-per-view content, caching is possible as long as the pay-per-view content is provided after getting approval from the accounting server 40 to send it on behalf of the content server 50. Then the origin data processing section 53 sends the data 92, 73, 87, 93 and 96 to the proxy server via the output port 52.

The proxy server receives the data 92, 73, 87, 93 and 96 from the content server 50 via the input port 34 (Step S14). The received data 92, 73, 87, 93 and 96 is transmitted to the proxy data processing section 35. The proxy data processing section 35 checks the received data, particularly data 93. If data 93 specifies that caching of the received content is allowed, the proxy data processing section 35 caches it into the cache data section 37 and stores the content ID with the memory address of the cached content data in the cache database 36. In this example, the data 93 specifies that even if included data is a pay-per-view content, caching is possible as long as the pay-per-view content is provided after getting approval from the accounting server 40 to send it on behalf of the content server 50. Therefore, the proxy data processing section 35 needs to get approval from the accounting server 40. However, this does mean that caching of the content is allowed. The proxy data processing section 35 thus caches the received content to the cache data section 37, and stores the content ID 94 and permission data 95 with the memory address of the cached content data in the cache database 36. The structure of the stored data is shown in Figure 5 as data 133 (Step S15). The proxy data processing section 35 checks the receiver associated with access ID one from the temporarily stored data 81, 61, 62, 82 and 84 with created access ID data 87, and creates the TCP/IP header data 98 (Step S16). The proxy data processing section 35 then deletes the temporarily stored data, and sends the data 98, 73 and 96 to the user of the first terminal 10 via output port 32.

The user terminal 10 receives the data 98, 73 and 96 via input port 12. The received data 98, 73 and 96 is transmitted to the reproduce section 14. The reproduce section 14 reproduces the received content data 97 (Step S17).

Next, a user of the terminal 20 makes a request to receive a list that shows the pay-per-view content that is available in the content server, via the request making section 23. The request comprises data 101, 102, 104 and 106 as shown in Figure 4. The data 101 includes the TCP and IP headers for requesting a data transmission. In this case, the source IP address is the IP address of terminal 20 and the destination IP address is the IP address of the proxy server 30. The data 102 includes the redirect IP address data 103 to retransmit the request data from the proxy server 30 to the accounting server 40. In this example, the redirect IP address is the address of the accounting server 40. The data 104 comprises access type data 105, where access type one means a request. The data 106 includes a content ID data 107, content ID zero meaning a content list. User then sends the request to the proxy server 30 via the output port 21.

The proxy server 30 receives the request from terminal 20, which includes data 101, 102, 104 and 106, via input port 31 (Step S18). The received data 101, 102, 104 and 106 is transmitted to the proxy data processing section 35. The proxy data processing section 35 creates an access ID and temporarily stores the received data 101, 102, 104 and 106 with this access ID data within its memory. The access ID data is used to identify the sender of the request (Step S19). The proxy data processing section 35 then accesses the cache database 36, and checks whether or not the requested data is cached. In this case, the requested pay content ID list data is cached since it was cached in step S5. The proxy data processing section 35 thus reads the requested data from the cache data section 37, and creates the data 109 and the data 78. The data 109 includes the data 110, which signifies a response to the data 105 (Step S20). The proxy data processing section 35 checks the receiver details from the previously stored data 101, 102, 104 and 106 which were stored with the created access ID, and creates the TCP/IP header data 108 (Step S21). The proxy data processing section 35 then deletes the temporarily stored data. Next, the proxy data processing section 35 sends the data 108, 109 and 78 to the user terminal 20 via the output port 32.

The user terminal 20 receives the data 108, 109 and 78 via the input port 22. The received data 108, 109 and 78 is transmitted to the reproduce section 24. The reproduce section 24 then reproduces the content list data 79 (Step S22). The user of the terminal 20 then selects the pay-per-view content from the reproduced pay-per-view content list and creates a request to see selected pay-per-view content via the request making section 23. The request is comprised of the data 113, 102, 104, 114 and 116. The TCP/IP header data 113 is created for sending the request to the proxy server 30. The usage of the data 102 and 104 has been explained. The data 114 includes ID number data 115 of the pay-per-view content that was selected by the user at terminal 20. In this case, the number of the ID is one. The data 116 includes accounting user ID data 117 for charging the user of terminal 20 to see the pay-per-view content. Then the request making section 23 sends the request data 113, 102, 104, 114 and 116 to the proxy server 30 via the output port 21.

The proxy server receives the data 113, 102, 104, 114 and 116 via the input port 31 (Step S23). The received data is transmitted to the proxy data processing section 35. The proxy data processing section 35 creates the access ID data 119, and temporarily stores the received data 113, 102, 104, 114 and 116 with the access ID data 119 within its memory. The data 119 includes the access ID number data 120 (Step S24). The proxy data processing section 35 accesses the cache database 36, and checks whether or not the requested data is cached. This time, the requested pay-per-view content ID one data is cached since it was cached in step S15 (Step S25). However the permission ID of content one is two, signalling that the cached data is pay-per-view content, and that approval from the accounting server 40 is required before sending the pay-per-view content on behalf of the content server 50. Therefore the proxy data processing section 35 creates the request data 118, 130, 119, 114 and 116 for getting approval from the accounting server 40. The data 130 includes the access type. This time, the access type ID data 131 is three, meaning that the data is a request of approval to send content data on behalf of the content server 50. Then the proxy data processing section 35 sends the request data 118, 130, 119, 114 and 116 to the accounting server 40 via the output port 33.

The accounting server 40 receives the request data 118, 130, 119, 114 and 116 via the input port 41 (Step S26). The received data 118, 130, 119, 114 and 116 is transmitted to the classifier 43. The classifier 43 again transmits the received data 118, 130, 119, 114 and 116 to the accounting section 45. The accounting section 45 analyses the received data. The accounting section 45 charges a price associated with the content ID data 114 to the charge ID that is specified by the data 116 (Step S27). The accounting section 45 then creates the TCP/IP header data 121 and approval data 122 since the received data includes the request data 130 to get permission to send the content on behalf of the content server 50. The data 122 includes the approval ID data 123, which is four. Then the accounting section sends the data 121, 122 and 119 to the proxy server via the output port 42.

The proxy server receives the data 121, 122 and 119 via the input port 34 (Step S28). The received data 121, 122 and 119 is transmitted to the proxy data processing section 35. The proxy data processing section 35 analyses the received data and checks for approval to send the content. The proxy data processing section 35 then retrieves the request details relating to access ID two, and reads the requested content data from the cache data section 37. In addition, it checks the details of the receiver of the access ID two from temporarily stored data 113, 102, 104, 114 and 116, stored with the created access ID data 119, and creates the TCP/IP header data 124 (Step S29). The proxy data processing section 35 creates data 124, 109 and 96, and deletes the temporarily stored data. Then the proxy data processing section 35 sends the data 124, 109 and 96 to the user terminal 20 via the output port 32.

The user terminal 20 receives the data 124, 109 and 96 via the input port 22. The received data 124, 109 and 96 is transmitted to the reproduce section 24. The reproduce section 24 reproduces the received content data 97 (Step S30).

### Second Embodiment

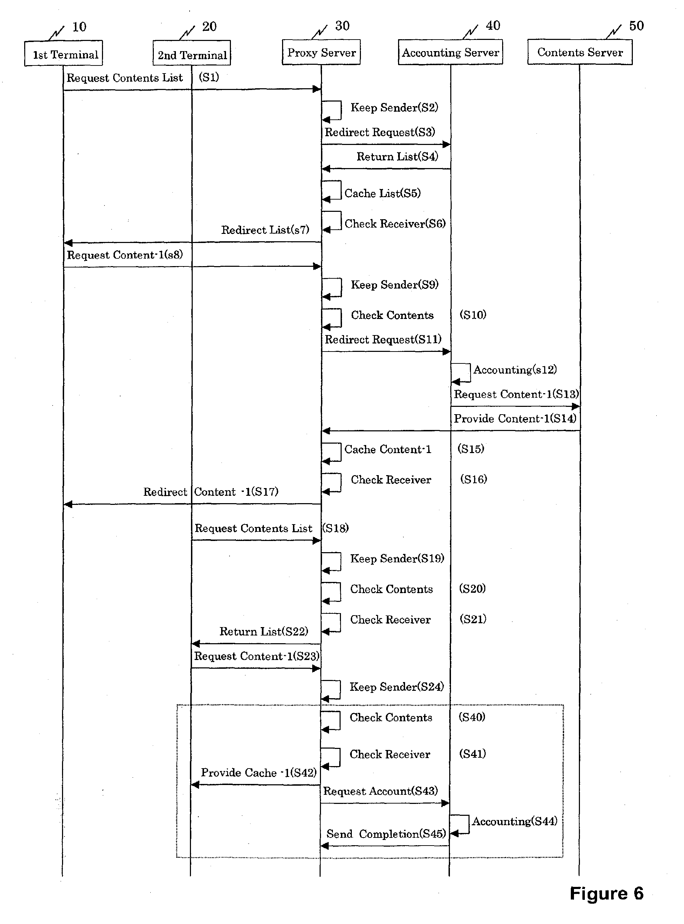

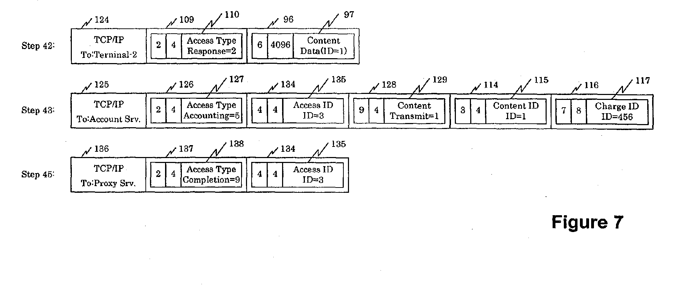

The system of the second embodiment is the same as the system depicted in Figure 1. The difference between the first and second embodiments is found in the sequence of operations, and the data structures used in some of the procedures. The sequence of pay-per-view content caching and transmission in the second embodiment is shown in Figure 6. In the case of the first embodiment, as shown in Figure 2, the proxy server 30 sends the requested pay-per view content after getting approval from the accounting server 40. However, in the case of Figure 6, the proxy server sends the requested pay-per-view content without getting approval from the accounting server. However, the accounting server 40, upon request from the proxy server, does return a completion of accounting message to the proxy server 30 when a charging is finished. If the proxy server does not receive such a completion message, it sends a further charge request to the accounting server. This ensures that charging is not missed due to a lost request message. Operation of the system of the second embodiment will now be described in detail with reference to Figures 6 and 7.

The sequences in Figure 6 that differ from those of Figure 2 are circumscribed in Figure 6 by a broken line rectangle. Procedures from step S1 to step S24 are therefore the same as those in Figure 2. After storing the sender of a request at step S24, the proxy data processing section 35 accesses the cache database 36, and checks whether or not the requested data is cached. This time, requested pay-per-view content ID one data is cached since it was cached in step S15 as shown in data 133 of Figure 5. The proxy data processing section 35 then reads the requested content data from the cache data section 37, and creates the data 96 (Step S40). Next, the proxy data processing section 35 checks the details of the receiver of the access ID two from the temporarily stored data 113, 102, 104, 114 and 116, stored with created access ID data 119, and creates the TCP/IP header data 124 and data 109 (Step S41). The proxy data processing section 35 then sends the data 124, 109 and 96 to the user terminal 20 via the output port 32.

The user terminal 20 receives the data 124, 109 and 96 via the input port 22. The received data 124, 109 and 96 is transmitted to the reproduce section 24. The reproduce section 24 reproduces the received content data 97 (Step S42). After sending the content, the proxy data processing section 35 creates data 125, 126, 134, 128, 114 and 116. The data 126 includes the access type data 127. The value of the access type data is five, meaning a request for accounting. The data 134 includes the access ID data 135 and the value of the ID is three. The data 128 includes the data transmission flag data 129. The value of the flag is one, meaning that the requested content has been sent. The usage of data 114 and 116 has been previously explained. The proxy data processing section 35 then sends the data 125, 126, 134, 128, 114 and 116 to the accounting server via the output port 33.

The accounting server receives the data 125, 126, 134, 128, 114 and 116 via the input port 41 (Step S43). The received data is then transmitted to the classifier 43. The classifier 43 transmits the received data to the accounting section 45. The accounting section 45 analyses the received data 125, 126, 134, 128, 114 and 116. The accounting section 45 charges a price associated with the content ID data 114 to the charge ID that is specified by the data 116 (Step S44). There is no need to send a request to the content server to send the requested content, since the data 129 shows that the proxy server 30 has already sent the content. The accounting section 45 then creates the data 136, 137 and 134. The data 136 includes a TCP/IP header data to send the completion data to the proxy server 30. The data 137 includes the data 138 that signals the completion of the accounting. The value of this completion ID is nine. Next, the accounting section 45 sends the data 136, 137 and 134 to the proxy server via the output port 42.

The proxy server receives the sent data 136, 137 and 134 via the input port 34. The received data 136, 137 and 134 is transmitted to the proxy data processing section 35. However if the proxy server 30 does not receive the accounting completion message from the accounting server 40 within some static time, for example 3 minutes, the proxy server again sends the request for accounting to the accounting server 40 as the step S43 (Step 45).

### Third Embodiment

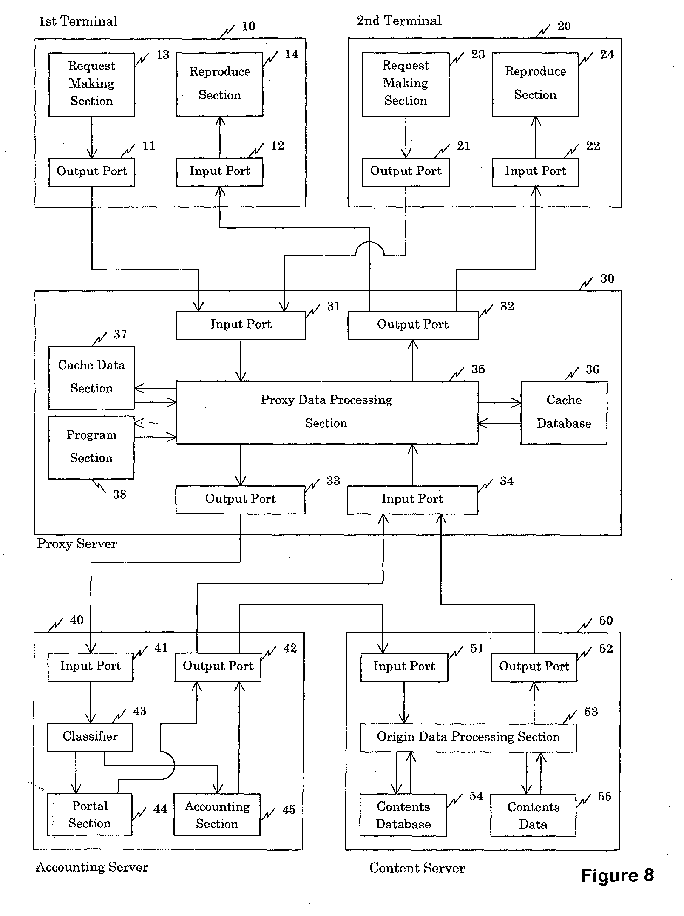

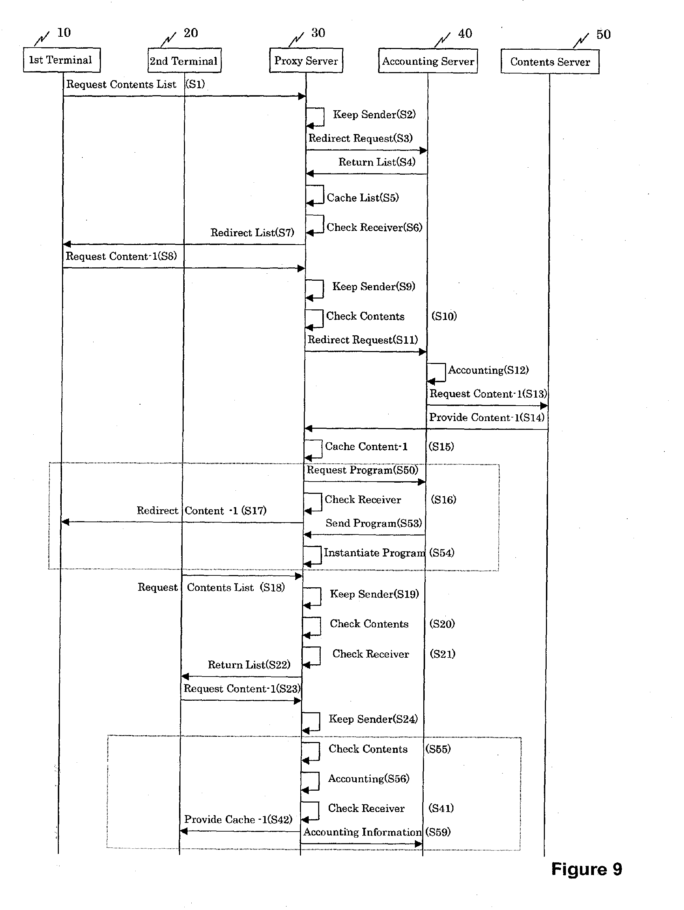

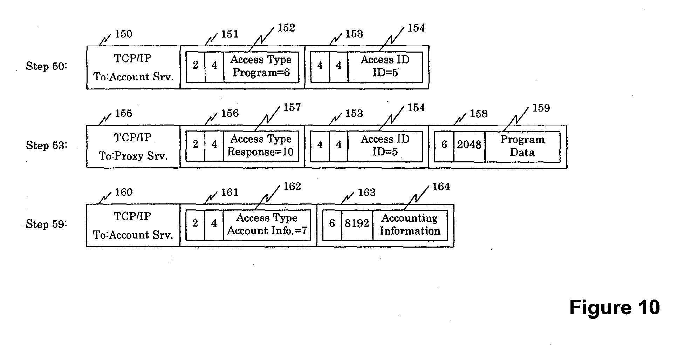

The system for pay-per-view content caching and transmission of the third embodiment is shown in Figure 8. The difference between Figure 1 and Figure 8 is the addition of a program section 38 in the proxy server 30. All other components are the same. The sequence of operations carried out by the system in Figure 8 is shown in Figure 9. Data which is exchanged between the components, and has not been previously described, is shown in Figure 10. In the system of Figure 1, the proxy server provides a cached content after getting approval from the accounting server. However, in the system of Figure 8, the proxy server receives a program to execute accounting on behalf of the accounting server, and provides content by charging via an internal accounting system. The differences between the sequence of operations of Figure 6 and those of Figure 9 are circumscribed by two broken line rectangles in Figure 9. The procedures of steps S1 to S15, and steps S18 to S24 are omitted from the discussion of the third embodiment, as they are the same as previously described. Operation of the system of Figure 8 will now be described in detail, with reference to Figures 9 and 10.

Having cached content one in step S15, should the caching permission ID be two, the proxy data processing section 35 then creates data 150, 151 and 153. The TCP/IP header data 150 includes the IP address of the accounting server 40, to which a request will be sent. The data 151 includes the access type data 152. The value of the data 152 is six, meaning a request for the accounting server to send an accounting program. The data 153 includes the access ID data 154, with a value of five for distinguishing the request. Then the proxy data processing section 35 sends the data 150, 151 and 153 to the accounting server 40 via the output port 33.

The accounting server receives the sent data via the input port 41 (Step S50). Then the proxy data processing section checks the details of the receiver of the content (Step S16). It then provides the requested content to the user terminal 10 (Step S17). The received data 150, 151 and 153 is transmitted to the classifier 43. The classifier transmits the received data to the accounting section 45. The accounting section 45 analyses the received data 150, 151 and 153, and creates data 155, 156, 153 and 158. The TCP/IP header data 155 includes the IP address of the proxy server 30, to where an accounting program will be sent. The data 156 includes the access type data 157. The value of the data 157 is ten, meaning a response to the program request. The data 153 has been previously explained. The data 158 includes real program data 159. Then the accounting section sends the data 155, 156, 153 and 158 to the proxy server 30 via the output port 42.

The proxy server 30 receives the sent data via the input port 34 (Step S53). The received data 155, 156, 153 and 158 is transmitted to the proxy data processing section 35. The proxy data processing section 35 retrieves the accounting program from the data 158, and executes it in the program section 38 (Step S54). After that, the procedures of steps 18 to 24 are executed. After storing the sender information relating to the request, the proxy data processing section 35 accesses the cache database 36, and checks whether or not the requested data is cached. In this case, the requested pay-per-view content ID one data is cached since it was cached in step S15 (Step S55). However, the permission ID of content one is two, meaning that the cached data is pay-per-view content, and there is a need for accounting on behalf of the accounting server 40. The proxy data processing section sends the content ID and charge ID to the program section 38. The program section charges a price associated with the content ID data to the charge ID that was received in step S23 (Step S56). The proxy data processing section 35 then checks the details of the receiver of the content (Step 41). Then the proxy data processing section 35 sends the requested content to the user terminal 20 via the output port 32.

The user terminal 20 reproduces the received content data (Step S42). The proxy data processing section 35 creates the data 160, 161 and 163 used to report accounting information to the accounting server. This reporting will occur regularly at a predefined interval, for example once per day. The TCP/IP header data 160 includes the IP address of the accounting server 40, where accounting information is to be sent. The data 161 includes the access type data 162. The value of the data 162 is seven, meaning a report of accounting information. The data 163 includes real accounting information data 164. The proxy data processing section 35 then sends the data 160, 161 and 163 to the accounting server 40 via the output port 33.

The accounting server receives the sent data via the input port 41. The received data is transmitted to the classifier 43. The classifier transmits the received data 160, 161 and 163 to the accounting section 45. The accounting section stores the accounting information based on the data 164 (Step S59).

### Fourth Embodiment

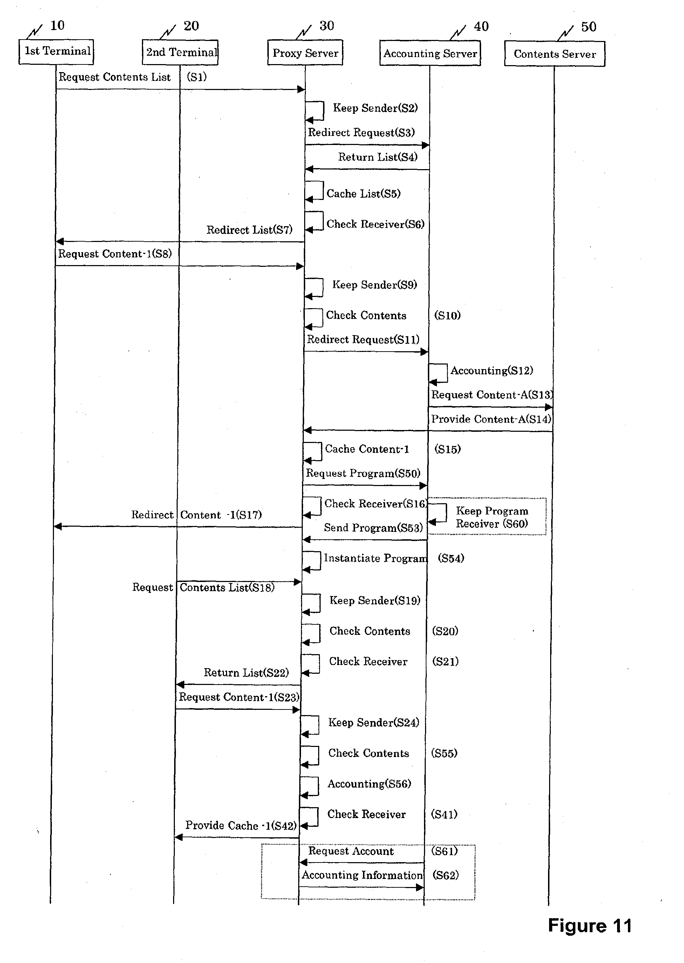

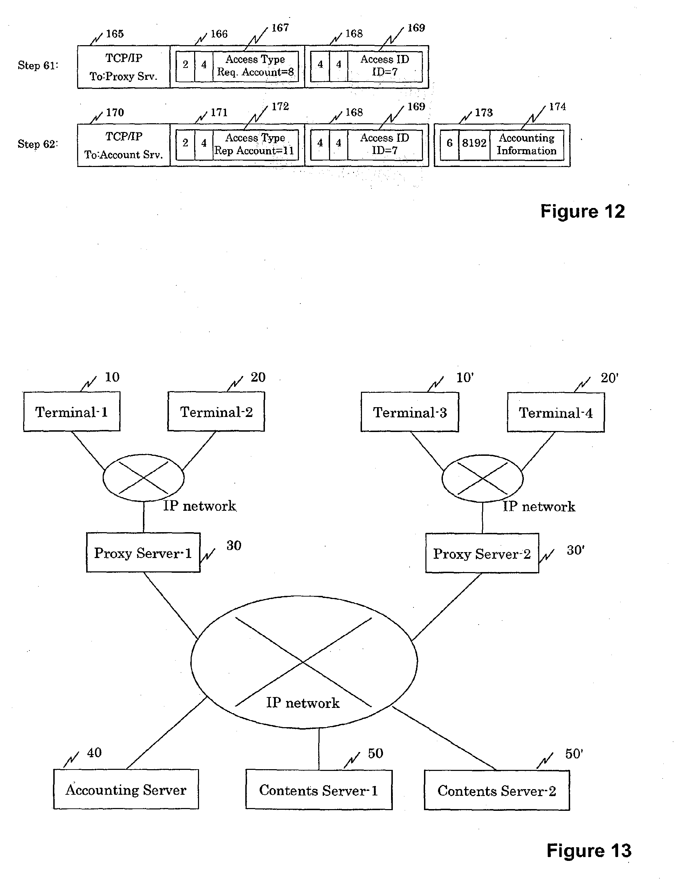

The system of the fourth embodiment is the same as the system shown in Figure 8. The difference between the third embodiment and the fourth embodiment is apparent in the operational sequences and the exchanged data structures used in some procedures. In the case of Figure 9, the proxy server spontaneously reports accounting information to the accounting server. However in the case of Figure 11, the proxy server reports the accounting information based on a request from the accounting server. Operation of the system of the fourth embodiment will now be described in detail with reference to Figures 11 and 12.

The sequences of Figure 11 which differ from those of Figure 9 are circumscribed by broken line rectangles in Figure 11. All procedures except steps S60 to S62 are the same as those of the procedure in Figure 9. The accounting section 45 stores the details of the receiver of the accounting program inside its memory before sending it (Step S60). After that, steps S53 to S42 are executed. Then, the accounting section 45 creates the data 165, 166 and 168. The TCP/IP header data 165 includes the IP address of the proxy server 30 to request accounting information. The data 166 includes the access type data 167. The value of the data 167 is eight, meaning a request for accounting information. The data 168 includes the access ID data 169, and the value of it is seven. The accounting section then sends the data 165, 166 and 168 to the proxy server via the output port 42.

The proxy server receives the sent data via the input port 34 (Step S61). The received data 165, 166 and 168 is transmitted to the proxy data processing section 35. The proxy data processing section 35 asks for accounting information from the program section 38, which it then receives. It then creates the data 170, 171, 168 and 173 to report the accounting information. The TCP/IP header data 170 includes the IP address of the accounting server 40 to report the accounting information. The data 171 includes the access type data 172. The value of the data 172 is eleven, meaning a report of accounting information. The data 173 includes real accounting information data 174. The proxy data processing section then sends the data 170, 171, 168 and 173 to the accounting server via the output port 33.

The accounting server receives the sent data via the input port 41. The received data is transmitted to the classifier 43. The classifier transmits the received data 170, 171, 168 and 173 to the accounting section 45. The accounting section stores the accounting information based on the data 174 (Step S62).

### Fifth embodiment

In the systems of Figures 1 and 8, only one proxy server, one content server and two user terminals are included. However, it is possible to connect multiple proxy servers and content servers to many user terminals via the invented pay-per-view content caching and transmitting system. An example of such a system is shown in Figure 13, where two user terminals 10' and 20', a proxy server 30' and a contents server 50' have been added to the system shown in Figure 1.

## Claims

1. A proxy server (30) for providing chargeable content to a plurality of user terminals (10,20) comprising:
input means (31) for receiving data from said plurality of user terminals (10,20) including requests for chargeable content;
output means (33) for sending data to an accounting server (40);
input means (34) for receiving chargeable content from at least one content server (50);
caching means (35,36,37) for caching chargeable content; and
terminal output means (32) for providing data to said plurality of user terminals (10,20), including said requested chargeable content;
**characterised in that**
when cached chargeable content is requested from one of the user terminals, said proxy server is operable to confirm that charging for said cached pay-per-view content has occurred.

2. A proxy server according to claim 1, wherein said caching means (35,36,37) is operable to cache said chargeable content only if permission for said caching has been provided.

3. A proxy server according to claim 1 or 2 including storage means (36,37) operable to temporarily store data relating to a request for content from the user terminals.

4. A proxy server according to any preceding claim wherein said input means (31) for receiving data from said plurality of user terminals (10,20) is configured to receive accounting information.

5. A proxy server according to any preceding claim comprising means (38) for storing and executing an accounting program for determining accounting data corresponding to the charge made to a user for viewing said pay-per-view content.

6. A system for providing content to a user, comprising a proxy server (30) as claimed in any preceding claim connected to said accounting server (40), said content server (50) and to said user terminals (10,20).

7. A system according to claim 6 wherein said proxy server (30) is operable to confirm that charging for cached chargeable content has occurred prior to supplying it to one of the user terminals (10,20).

8. A system according to claim 6 wherein said proxy server (30) is operable to confirm that charging for cached chargeable content has occurred by requesting confirmation from said accounting server (40) at least once.

9. A system according to claim 8 wherein said proxy server (30) is further operable to inform said accounting server (40) that said chargeable cached content has been transmitted to said user terminal (10,20).

10. A system according to any one of claim 6 to 9 wherein:
said proxy server (30) is operable to confirm that charging for cached pay-per-view content has occurred by running an accounting program locally thereon to produce accounting data corresponding to the charge made to the user for receiving said chargeable cached content and sending the accounting data to the accounting server (40).

11. A system according to claim 10 wherein said accounting server (40) requests said accounting data from said proxy server (30) at least once.

12. A method of providing content to a user comprising:
receiving a request for chargeable content from one of a plurality of user terminals (10,20);
determining whether said content is cached;
providing said requested content to said user terminal (10,20); and
**characterised by**
confirming that charging for cached pay-per-view content has occurred.

13. A method according to claim 12 including confirming that charging for cached pay-per-view content has occurred by receiving confirmation of charging from an accounting server (40) before providing said requested content to said user terminal (10,20).

14. A method according to claim 12 including confirming that charging for chargeable cached content has occurred is achieved by requesting confirmation from an accounting server (40) at least once.

15. A method according to claim 11 wherein confirming that charging for cached pay-per-view content has occurred is achieved by:
receiving an accounting program from an accounting server (40);
running said accounting program to produce accounting data corresponding to the charge made to the user for receiving said chargeable content.

16. A method according to claim 15 including sending said accounting data to said accounting server (40).

17. A method according to claim 16 wherein said accounting server (40) requests said accounting data at least once.

18. An accounting server (40) for charging a user for chargeable content received by said user comprising:
input means (41) for receiving data from at least one proxy server (30);
output means for providing data to said proxy server (30) and a content server (50);
data classifying means (43);
data analysing and processing means (44);
accounting means (45); and **characterised in that**
said accounting server (40) is operable to provide confirmation to said proxy server (30) that charging for said pay-per-view content has occurred.

19. An accounting server (40) for charging a user for chargeable content received by said user, comprising:
input means (41) for receiving data from at least one proxy server (30);
output means for providing data to said proxy server (30) and a content server (50);
data classifying means (43);
data analysing and processing means (44);
accounting means (45); and **characterised in that**
said accounting server (40) is operable to provide an accounting program for producing accounting data corresponding to the charge made to the user for receiving pay-per-view content to said proxy server (30).
